# EUROPÄISCHE PATENTANMELDUNG

(11) **EP 0 788 190 A2**
(43) Veröffentlichungstag der Anmeldung: **06.08.1997**
(21) Anmeldenummer: 97810062.6
(22) Anmeldetag: 04.02.1997
(51) Int. Cl.: H01R 4/60, H01R 13/533

(54) **Verbindungsstück für zwei Abschnitte eines hochspannungsführenden Stromleiters**

(30) Priorität: 08.02.1996 DE 19604485
(71) Anmelder: ASEA BROWN BOVERI AG, 5400 Baden (CH)
(72) Erfinder: Moritz, Bertil, 72348 Västeras (SE)
(74) Vertreter: Kaiser, Helmut, Dr.

(57) **Zusammenfassung**

Das Verbindungsstück (5) dient der mechanischen, eine Winkelung ermöglichenden Verbindung und der Kompensation axialer Ausgleichsbewegungen zweier einander zugewandter, rohrförmig ausgebildeter Abschnitte (6, 7) eines hochspannungsführenden Stromleiters (4) einer gasisolierten Leitung. In die Innenflächen der beiden rohrförmigen Abschnitte (6, 7) sind jeweils mindestens zwei axial geführte und auf einander gegenüberstehende Stirnseiten der beiden Abschnitte erstreckte Nuten (8, 9) eingeformt. Die Nuten (8,9) nehmen jeweils ein Teil (10, 11) eines zweiteilig ausgeführten Verbindungselements (12) auf. Die beiden Teile des Verbindungselements sind unter Bildung einer flexiblen Verbindung miteinander verrastet.

## Beschreibung

### TECHNISCHES GEBIET

Bei der Erfindung wird ausgegangen von einem Verbindungsstück für zwei axial gegeneinander verschiebliche, rohrförmig ausgebildete Abschnitte eines in einem isoliergasgefüllten Druckrohr auf Stützisolatoren im wesentlichen zentrisch gehaltenen, hochspannungsführenden Stromleiters einer gasisolierten Leitung, welches der Kompensation axialer Ausgleichsbewegungen der einander zugewandten Enden der beiden Abschnitte dient.

### STAND DER TECHNIK

Ein Verbindungsstück der eingangs genannten Art ist beispielsweise in einem Aufsatz von A.Eidinger: Aufbau, Einsatz und Erprobung von SF₆-RohrqaskabeIn, Brown Boveri Mitt. 61 1976 (11) 688-694, beschrieben. Bei einer aus diesem Stand der Technik bekannten metallgekapselten elektrischen Hochspannungsleitung ist ein in der isoliergasgefüllten Metallkapselung zentrisch gehaltener Stromleiter auf Isolierbeinen abgestützt. Bei der Montage der Hochspannungsleitung werden als Transporteinheiten ausgebildete Stromleiterabschnitte vor Ort zusammengeschweisst. Das axiale Wärmedehnungsspiel des so gefertigten Stromleiters wird durch Kompensatoren aufgenommen, welche die volle Stromtragfähigkeit aufweisen.

### KURZE DARSTELLUNG DER ERFINDUNG

Der Erfindung, wie sie in den Patentansprüchen angegeben ist, liegt die Aufgabe zugrunde, ein Verbindungsstück der eingangs genannten Art zu schaffen, welches die Montage des Stromleiters auch in gekrümmt geführten Abschnitten der gasisolierten Leitung erleichtert.

Das Verbindungsstück nach der Erfindung zeichnet sich dadurch aus, dass der Stromleiter vor Ort durch Zusammenstecken der beiden Teile jeweils zweiteilig ausgebildeter Verbindungselemente in einfacher und wirtschaftlicher Weise im Druckrohr montiert werden kann. Schweissarbeiten und damit verbundene Verschmutzungsrisiken entfallen vollständig. Durch geeignete Ausbildung der beiden zusammenwirkenden Teile der im Verbindungsstück vorgesehenen Verbindungselemente können aufeinanderfolgende Stromleiterabschnitte gewinkelt angeordnet werden, so dass auch gekrümmt geführte Abschnitte der gasisolierten Leitung leicht herstellbar sind. Da die Verbindungselemente im Inneren der rohrförmig ausgebildeten Stromleiterabschnitte angeordnet sind, kann bei der Montage oder bei thermisch bedingten Ausgleichsbewegungen der Stromleiterabschnitte gegebenenfalls entstehender Materialabrieb nicht in den dielektrisch hoch beanspruchten Gasraum zwischen Stromleiter und Druckrohr gelangen.

### KURZE BESCHREIBUNG DER ZEICHNUNGEN

Ein bevorzugte Ausführungsbeispiel der Erfindung und die damit erzielbaren weiteren Vorteile werden nachfolgend anhand von Zeichnungen näher erläutert. Hierbei zeigt:
- Fig.1: eine Aufsicht auf einen axial geführten Schnitt durch eine gasisolierte Leitung mit einem Verbindungsstück nach der Erfindung,
- Fig.2: eine Aufsicht in Pfeilrichtung auf einen längs II-II axial geführten Schnitt durch das Verbindungsstück gemäss Fig.1,
- Fig.3: eine in Pfeilrichtung geführte Aufsicht auf ein erstes Teil eines im Verbindungsstück gemäss Fig.1 vorgesehenen Verbindungselementes,
- Fig.4: eine in Pfeilrichtung geführte Aufsicht auf ein zweites Teil des im Verbindungsstück gemäss Fig.1 vorgesehenen Verbindungselementes,
- Fig.5: eine in axialer Richtung von links auf das Teil gemäss Fig.4 geführte Ansicht,
- Fig.6: eine in axialer Richtung geführte Aufsicht auf eine Stirnseite eines in das Verbindungsstück gemäss Fig.1 integrierten Stromleiterabschnitts der gasisolierten Leitung, und
- Fig.7: eine vergrösserte Darstellung eines in Fig.6 umrandet dargestellten Bereichs der Stirnseite des Stromleiterabschnitts.

### WEG ZUR AUSFÜHRUNG DER ERFINDUNG

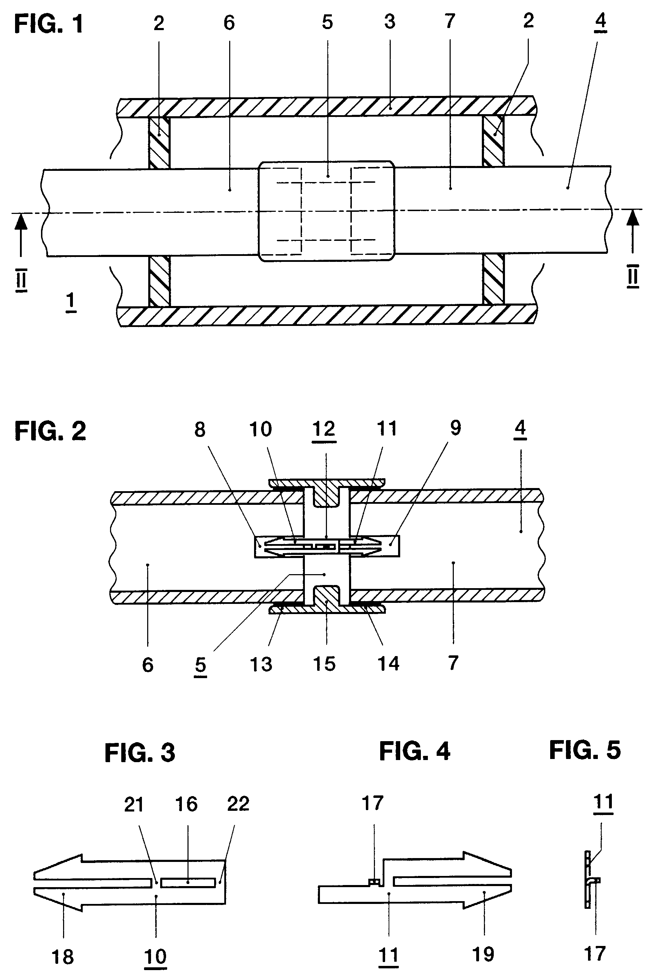

In allen Figuren beziehen sich gleiche Bezugszeichen auf gleichwirkende Teile. Eine in Fig.1 dargestellte und mit dem Bezugszeichen 1 gekennzeichnete gasisolierte Leitung weist einen auf Stützisolatoren 2 in einem Druckrohr 3 zentral gelagerten und rohrförmig ausgebildeten Stromleiter 4 auf. Das Druckrohr 3 ist mit einem Isoliergas, wie etwa SF₆, mit bis zu einigen bar Druck gefüllt und kann aus Metall, wie etwa Aluminium oder Stahl, aus gegebenenfalls leitfähig beschichtetem Isolierstoff, oder aus einem rohrförmigen, metallenen Aussen-leiter und einem umgebenden, druckfesten Isolierrohr bestehen, wobei als Material für den Isolierstoff vorzugsweise ein gegebenenfalls füllstoffverstärktes -insbesondere faserverstärktes - Duromer, etwa ein Thermoplast, wie insbesondere ein Polyäthylen, oder ein Duromer, wie insbesondere ein Epoxid, verwendet wird. Das Bezugszeichen 5 bezieht sich auf ein Verbindungs-stück, welches der mechanischen und elektrischen Kopplung zweier im Stromleiter 4 aufeinanderfolgender Leiterabschnitte 6, 7 dient.

Aus Fig.2 ist ersichtlich, dass in die Innenflächen der beiden rohrförmigen Stromleiterabschnitte 6, 7 jeweils eine axial geführte und auf eine Stirnseite des betreffenden Abschnitts 6 bzw. 7 erstreckte Nut 8 bzw. 9 eingeformt ist. Diese Nut dient jeweils der Aufnahme eines Teils 10 bzw. 11 eines zweiteilig ausgebildeten, flexiblen Verbindungselementes 12. Mit den Bezugszeichen 13 bzw. 14 sind auf dem Abschnitt 6 bzw. 7 gelagerte Kontaktelemente bezeichnet, über welche ein rohrförmig ausgebildetes und der Führung des Leiterstroms dienendes Abschirmrohr 15 unter Bildung einer in radialer Richtung wirkenden Kontaktkraft geschoben ist. Anstelle eines solchen Abschirmrohrs 15 kann bei geeigneter Ausbildung der einander zugewandten Enden der Stromleiterabschnitte 6, 7 auch ein anderes leiterstromführendes Verbindungsteil vorgesehen werden, beispielsweise mehrere mit den Stromleiterabschnitten 6, 7 galvanisch verbindbare, flexible Leiterteile.

In den Figuren 3 bis 5 sind die beiden Teile 10, 11 des Verbindungselementes 12 vergrössert dargestellt. Beide Teile werden jeweils von einer überwiegend axial ausgerichteten, aus einem federnden Werkstoff, wie insbesondere einem Federstahl, bestehenden Platte gebildet. In die das Teil 10 bildende Platte ist im rechts gelegenen Abschnitt ein axial geführter Schlitz 16 eingeformt, während an die das Teil 11 bildende Platte im links gelegenen Abschnitt eine Nase 17 angeformt ist. Beide Platten laufen jeweils als U-förmige Feder 18, 19 aus, deren beide Schenkel jeweils einen Widerhaken tragen.

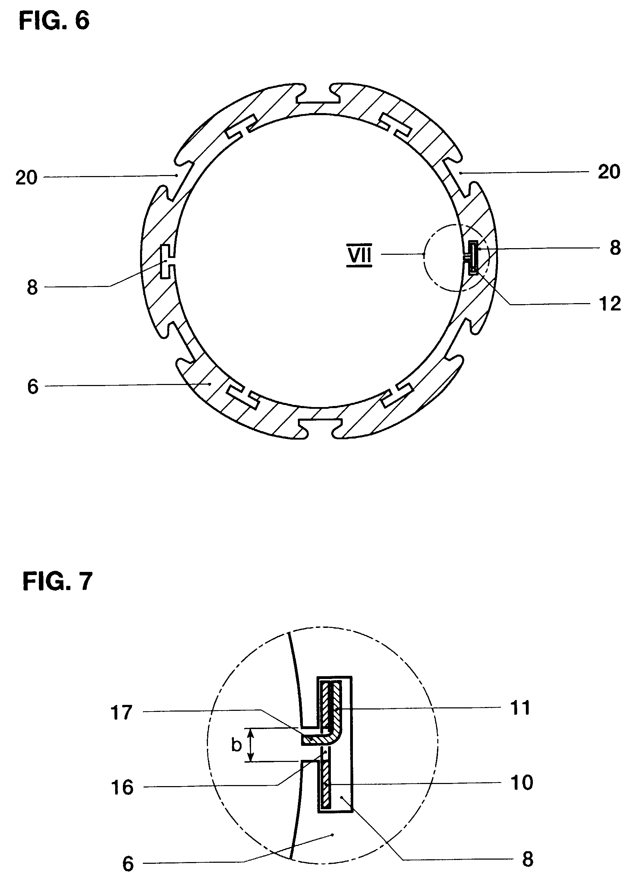

Aus den Figuren 6 und 7 ist ersichtlich, dass die in die Innenfläche des Stromleiterabschnitts 6 eingeformte Nut 8 hinterschnitten ausgebildet ist. Entsprechend ausgebildet sind auch die korrespondierende Nut 9 sowie weitere Nuten 8 bzw. 9 welche im Umfangsrichtung gleichmässig verteilt in die Leiterabschnitte 6, 7 eingeformt sind. Jeder der Nuten 8 bzw. 9 dient der Halterung eines Teils 10, 11 eines Verbindungselements 12.

Bei der Montage des Stromleiters 4 wird jedes Teil 10 bzw. 11 mit seinem als Feder 18 bzw. 19 ausgebildeten Ende von der Stirnseite des Leiterabschnitts 6 bzw. 7 her solange in die Nut 8 bzw. 9 eingeschoben bis die Widerhaken hinter zwei in den Nutflanken vorgesehenn Haltenasen einrasten. Durch Spreizwirkung der Feder 18 bzw. 19 wird so jedes der Teile 10 bzw. 11 festgesetzt. Die einem Verbindungselement 12 zugeordneten beiden plattenförmigen Teile 10, 11 werden mit ihren aus der Nut 8 bzw. 9 heraustehenden flachen Endabschnitten übereinander gelegt und durch Zusammenführen der beiden Leiterabschnitte 6, 7 gegeneinandergeschoben. Hierbei rastet die Nase 17 unter Bildung des Verbindungselements 12 in den Schlitz 16 ein. Gleichzeitig kann bei Verwendung des Abschirmrohrs 15 die elektrische Verbindung durch Einschieben der Leiterabschnitte in dieses Rohr hergestellt werden.

Bereits mit zwei diametral angeordneten Verbindungselementen 12 wird so in einfacher Weise und ohne kompliziertes Montagegerät eine mechanisch stabile Verbindung der beiden Leiterabschnitte 6, 7 erreicht. Die im Schlitz 16 axial geführte Nase 17 ermöglicht eine axiale Ausgleichsbewegungen der einander zugewandten Enden der beiden Abschnitte 6, 7. Die axiale Bewegung der Nase 17 und damit die relative axiale Bewegung der beiden Teile 10, 11 bzw. der beiden Stromleiterabschnitte 6, 7 wird durch den Schlitz 16 in axialer Richtung abschliessende Stege 21, 22 begrenzt. Schlitz 16 und Nase 17 wirken daher zugleich auch als ein die axiale Verschiebung der beiden Teile 10, 11 begrenzendes Element.

Aufgrund der überwiegend in axialer Richtung gewährleisteten Verschiebbarkeit und der Blattfederwirkung des aus der Nut 8 bzw. 9 ragenden Abschnitts der beiden plattenförmigen Teile 10, 11 ermöglichen die Verbindungselemente 12 zugleich eine leicht gewinkelte Anordnung der beiden Leiterabschnitte 6, 7 zueinander. Es ist so möglich, auch gekrümmte Abschnitte der gasisolierten Leitung leicht herzustellen.

Wie aus Fig.7 ersichtlich ist, ist die Nase 17 in Umfangsrichtung des Stromleiterabschnitts 6 mit Spiel im Schlitz 16 gelagert. Typischerweise beträgt die Breite b des Schlitzes 16 das 2- bis 5-fache der in Umfangsrichtung des Stromleiterabschnitts 6 gemessenen Dicke der Nase 17. Hierdurch ist sichergestellt, dass auch bei grösseren fertigungsbedingten Abweichungen die beiden Teile 10, 11 aller im Umfangsrichtung verteilten Verbindungselemente 12 stets problemlos miteinander verbunden werden können.

Wie in Fig.6 dargestellt ist, sind in die Mantelfläche des Leiterabschnitts 6 sechs auf dessen Stirnseite erstreckte, axial geführte Nuten 20 eingeformt. Diese Nuten 20 können jeweils der Aufnahme eines der Kontaktelemente 13 dienen. Zugleich kann in diesen Nuten jeweils auch ein Isolierteil eines der Stützisolatoren 2 gehalten sein.

Die Teile 6, 7 müssen nicht notwendigerweise plattenförmig ausgebildet sein. So ist es beispielsweise möglich, das eine Teil als Rohr auszubilden und das andere Teil als Stift, welcher mit Spiel und in axialer Richtung verschieblich im Rohr geführt ist. Als Element zur Begrenzung der axialen Bewegung der beiden Teile und damit der beiden Stromleiterabschnitte können dann wiederum ein Schlitz und eine im Schlitz geführte Nase vorgesehen sein.

### Bezugszeichenliste

- 1: gasisolierte Leitung
- 2: Stützisolator
- 3: Druckrohr
- 4: Stromleiter
- 5: Verbindungsstück
- 6, 7: Stromleiterabschnitte
- 8, 9: Nuten
- 10, 11: Teile
- 12: Verbindungselement
- 13, 14: Kontaktelemente
- 15: Abschirmrohr
- 16: Schlitz
- 17: Nase
- 18, 19: Federn
- 20: Nuten
- 21, 22: Stege

## Patentansprüche

1. Verbindungsstück (5) für zwei axial gegeneinander verschiebliche, rohrförmig ausgebildete Abschnitte (6, 7) eines in einem isoliergasgefüllten Druckrohr (3) auf Stützisolatoren (2) im wesentlichen zentrisch gehaltenen, hochspannungsführenden Stromleiters (4) einer gasisolierten Leitung (1), welches der Kompensation axialer Ausgleichsbewegungen der einander zugewandten Enden der beiden Abschnitte (6, 7) dient, dadurch gekennzeichnet, dass in die Innenflächen der beiden rohrförmigen Abschnitte jeweils mindestens zwei axial geführte und auf einander gegenüberstehende Stirnseiten der beiden Abschnitte erstreckte Nuten (8, 9) eingeformt sind, und dass in den zwei Nuten (8, 9) jeweils ein Teil (10, 11) eines zweiteilig ausgebildeten, flexiblen Verbindungselementes (12) gehalten ist.

2. Verbindungsstück nach Anspruch 1, dadurch gekennzeichnet, dass die beiden Teile (10, 11) des Verbindungselementes (12) in axialer Richtung relativ zueinander verschiebbar ausgebildet sind.

3. Verbindungsstück nach Anspruch 2, dadurch gekennzeichnet, dass die beiden Teile (10, 11) ein die axiale Verschiebung begrenzendes Element aufweisen.

4. Verbindungsstück nach Anspruch 3, dadurch gekennzeichnet, dass das Begrenzungselement einen in einem ersten (10) der beiden Teile (10, 11) axial geführten Schlitz (16) aufweist sowie eine in das zweite (11) der beiden Teile (10, 11) eingeformte, im Schlitz (16) in axialer Richtung verschieblich führbare Nase (17).

5. Verbindungsstück nach Anspruch 4, dadurch gekennzeichnet, dass die Nase (17) in Umfangsrichtung der Stromleiterabschnitte (6, 7) mit Spiel im Schlitz (16) gelagert ist.

6. Verbindungsstück nach einem der Ansprüche 1 bis 5, dadurch gekennzeichnet, dass die beiden Teile (10, 11) jeweils mindestens ein durch Spreizwirkung in der zugeordneten Nut festsetzbares Ende aufweisen.

7. Verbindungsstück nach Anspruch 6, dadurch gekennzeichnet, dass das festsetzbare Ende als U-förmige, Widerhaken tragende Feder (18, 19) ausgebildet ist.

8. Verbindungsstück nach einem der Ansprüche 1 bis 7, dadurch gekennzeichnet, dass die beiden Teile (10, 11) des Verbindungselements (12) jeweils von einer überwiegend axial ausgerichteten Platte gebildet sind.

9. Verbindungsstück nach einem der Ansprüche 1 bis 8, dadurch gekennzeichnet, dass in die Mantelfläche mindestens eines ersten der beiden rohrförmigen Stromleiterabschnitte (6, 7) mindestens zwei axial geführte und auf einander gegenüberstehende Stirnseiten der beiden Abschnitte erstreckte Nuten (20) eingeformt sind, welche jeweils der Aufnahme eines federnd ausgebildeten Kontaktelementes (13) dienen, und dass ein mit dem zweiten Stromleiterabschnitt (7) elektrisch leitend verbundenes und der Führung des Leiterstroms dienendes Abschirmrohr (15) vorgesehen ist, welches in axialer Richtung unter Bildung von Kontaktkraft über das Kontaktelement (13) geschoben ist.

10. Verbindungselement nach Anspruch 9, dadurch gekennzeichnet, dass die das Kontaktelement (13) aufnehmende Nut (20) zugleich ein Isolierteil eines der Stützisolatoren (2) trägt.
